# EUROPEAN PATENT SPECIFICATION

(11) **EP 0 390 382 B1**
(45) Date of publication and mention of the grant of the patent: **04.10.1995**
(21) Application number: 90302864.5
(22) Date of filing: 16.03.1990
(51) Int. Cl.: C08L 23/04, C08L 23/20

(54) **Thermoplastic resin composition**
Thermoplastische Zusammensetzung
Composition thermoplastique

(30) Priority: 29.03.1989 JP 79824/89
(43) Date of publication of application: 03.10.1990
(73) Proprietor: SUMITOMO CHEMICAL COMPANY LIMITED, Osaka-shi, Osaka 541 (JP)
(72) Inventor: Yamada, Kunio, Chiba-shi (JP); Hayashida, Haruo, Chiba-shi (JP); Wakamatsu, Kazuki, Kimitsu-gun, Chiba-ken (JP); Nomura, Ryouichi, Ichihara-shi (JP); Kobayashi, Shigeichi, Kimitsu-gun, Chiba-ken (JP); Koyama, Satoru, Kimitsu-gun, Chiba-ken (JP)
(74) Representative: Cresswell, Thomas Anthony

(56) References cited:
- EP-A- 0 152 701

## Description

This invention relates to a thermoplastic resin composition improved in optical properties. More particularly, it relates to a thermoplastic resin composition improved in optical properties which comprises a polymer of a vinylcycloalkane having 6 or more carbon atoms and polyethylene. The composition can provide a variety of products excellent in optical properties such as sheet, film, vessel and the like by extrusion molding process, injection molding process, air-pressure forming process, vacuum forming process, blow molding process, etc. When the composition is used as a raw material of powdery coating material, a product having excellent surface gloss can be obtained.

At the present time, a large amount of polyethylene type resin is used because it is easy to form by various forming processes and it is relatively excellent in general purpose property such as chemical resistance, cold resistance, impact resistance, heat sealability etc. and further it is inexpensive. As the use of resin material becomes diversified in the recent time, polyethylene type resin excellent in optical properties has become desired in order to improve the commercial value of packaged product in the field of packaging and that of coated article in the field of powder coating.

Hitherto, a number of proposals have been made regarding the improvement of optical properties of polyethylene type resins (Japanese Patent Application Kokai (Laid-Open) Nos. 58-67738, 61-255952, 60-106846, 58-21437, Japanese Patent Publication Nos. 59-23743, 44-32296, etc.).

In these proposals, a nucleating agent such as sorbitol derivative and the like is added to a polyethylene type resin, or a resin other than polyethylene type resin such as polypropylene and the like is blended with a polyethylene type resin.

Although addition of nucleating agent such as sorbitol derivative and the like is effective for improvement of optical properties, the nucleating agent must be added in a large quantity, due to which roll and die are polluted at the time of molding. Further, after the molding process, the product has an intense odor or the nucleating agent bleeds out onto the surface of molded product to deteriorate its commercial value. On the other hand, the blending of a resin other than polyethylene type resin such as polypropylene for the sake of improving optical properties is disadvantageous in that its effect is insufficient if the blended mixture is processed at a temperature higher than the melting point of the resin to be blended.

EP-A-0152701 describes a process for improving transparency and rigidity of propylene polymers which comprises the polymerisation of a vinyl cycloalkane in the presence of a titanium catalyst and using the product thereof with propylene and, optionally, ethylene to form the desired propylene copolymer.

It is the object of this invention to obtain a product excellent in optical properties without polluting roll and die at the time of molding and processing, without deteriorating the odor of molded product after processing, without bleeding-out onto the surface of product, and without deteriorating the excellent properties of polyethylene type resin itself.

With the aim of solving the above-mentioned problem, the present inventors conducted many studies. As the result, it was found that optical properties can be improved by using a thermoplastic resin composition comprising a polymer of vinylcycloalkane having 6 or more carbon atoms and polyethylene as the molding material. Based on this finding, this invention was accomplished.

Thus, the object of this invention is to provide a thermoplastic resin composition comprising (A) up to 10% by weight of a polymer of a vinylcycloalkane having 6 or more carbon atoms and an intrinsic viscosity of 0.5 to 10 dl/g as measured at 135°C at the concentration of 50mg/25ml, and (B) at least 90% by weight of polyethylene, and containing 0.00005% to 1.0% by weight of vinylcycloalkane repeating units originating from vinylcycloalkane polymer (A) based on the total weight of polymers (A) and (B).

### DESCRIPTION OF THE PREFERRED EMBODIMENTS

The polymer of vinylcycloalkane having 6 or more carbon atoms used as component (A) of this invention has an intrinsic viscosity [η] of 0.5 to 10 dl/g, preferably 1 to 5 dl/g as measured in tetralin at 135°C at the concentration of 50 mg/25 ml, and it involves homopolymers of vinylcycloalkanes, random copolymers of a vinylcycloalkane and a small quantity of other vinylcycloalkane, ethylene or alpha-olefin, and block copolymers of a vinylcycloalkane and an alpha-olefin. Among these vinylcycloalkane polymers, said block copolymers are preferable. Said alpha-olefin has 3-18 carbon atoms, and is, for example, propylene, butene-1, hexene-1, 4-methyl-pentene-1, octene-1, decene-1, etc.

As said vinylcycloalkane block copolymer, (1) copolymers produced by polymerizing a vinylcycloalkane in the first step and homopolymerizing propylene in the second step, (2) copolymers produced by polymerizing a vinylcycloalkane in the first step, and random copolymerizing propylene and ethylene or other alpha-olefin in the second step, and (3) multi-stage copolymers formed between vinylcycloalkane and various alpha-olefins such as those produced by homopolymerizing propylene in the first step, polymerizing a vinylcycloalkane in the second step, and again homopolymerizing propylene or random copolymerizing propylene with ethylene or other alpha-olefin in the third step are preferable.

The vinylcycloalkanes having 6 or more carbon atoms which can be used in this invention include vinylcyclobutane, vinylcyclopentane, vinyl-3-methylcyclopentane, vinylcyclohexane, vinyl-2-methylcyclohexane, vinyl-3-methylcyclohexane, vinylnorbornane and the like. Among them, vinylcycloalkanes having 8 or more carbon atoms are preferable, and vinylcyclohexane is most preferable.

These polymers of vinylcycloalkane having 6 or carbon atoms can be successfully produced by the use of a catalyst system consisting of a titanium compound and an organoaluminum compound. As said titanium compound, the titanium trichloride catalyst commercialized by Toyo Stofer Co., Toho Titanium Co., Marubeni-Solvey Co., etc. can be referred to.

The catalyst produced by supporting a titanium compound on a magnesium compound mentioned in Japanese Patent Application Kokai (Laid-Open) Nos. 57-59916 and 55-133408 is also usable successfully. As said organoaluminum compound, alkylaluminum compounds represented by AlxₐR₃₋ₐ, wherein X is halogen atom, alkoxy group or hydrogen atom, R is alkyl group having 1-18 carbon atoms and a is a number satisfying 0 ≦ a < 3, are preferable. As concrete examples of said organoaluminum compound, the followings can be referred to: Al(CH₃)₃, Al(C₂H₅)₃, Al(C₂H₅)₂Cl, Al(C₂H₅)₂Br, Al(C₂H₅)₂(OC₂H₅), Al(C₂H₅)₂(OC₄H₉), Al(C₂H₅)(OC₄H₉)₂, Al(C₂H₅)Cl₂, Al(C₄H₉)₃, Al(C₄H₉)₂Cl, Al(C₆H₁₃)₃, Al(C₆H₁₃)₂Cl, and mixtures thereof.

Further, it is also possible to polymerize vinylcycloalkane after adding an electron donor such as carboxylic ester, phosphoric ester, silicic ester and the like for the purpose of improving the stereo-specificity of the resulting polymer.

The polyethylene used as component (B) of this invention is selected from (1) the so-called ion-polymerized polyethylene produced by polymerizing ethylene and an alpha-olefin having 3-18 carbon atoms in the presence of transition metal catalyst, usually at a temperature of 30°C to 300°C, under a pressure ranging from ordinary pressure to 3,000 kg/cm², in a solvent or in the absence of solvent, in gas-solid phase, liquid-solid phase or uniform liquid phase, and modified polyethylenes produced by modifying the above-mentioned ion-polymerized polyethylene with maleic anhydride, α,β-unsaturated carboxylic acid or the like according to known method and (2) the so-called high-pressure radical polymerized polyethylene produced by polymerizing ethylene and/or a small quantity of other monomer copolymerizable with ethylene by the use of a radical initiator such as organic peroxide or oxygen, usually at a temperature of 130-300°C, under a pressure of 500-3,000 kg/cm² and modified polyethylene produced by modifying the above-mentioned high-pressure radical polymerized polyethylene with maleic anhydride, α,β-unsaturated carboxylic acid or the like according to known method. Said polyethylene may be used either alone or as mixture of two or more.

The content of vinylcycloalkane unit in the thermoplastic resin composition of this invention is important in order to exhibit an improving effect without changing the the original properties of polyethylene itself, the content of vinylcycloalkane unit originated from the vinylcycloalkane polymer (A) in the thermoplastic resin composition is 0.00005-1.0% by weight, more preferably 0.0001-0.5% by weight, and particularly preferably 0.001-0.2% by weight. If the content of the vinylcycloalkane unit is lower than 0.00005% by weight, optical properties are not good and the improvement in surface gloss is insufficient when the composition is used as starting material of a powder coating material. If its content exceed 1.0% by weight, the original properties of polyethylene itself can be changed, and it is not desirable.

The composition of this invention is obtained by uniformly mixing together components (A) and (B). In mixing the components, known blending methods can be employed. Thus, both the components are dry-blended by means of a mixer such as Henschel mixer, tumbler blender or the like, or they are mixed and then melted, kneaded and granulated by the use of single shaft extruder or multi-shaft extruder, or they are melted, kneaded and granulated by means of Banbury mixer, kneader, roll mill or the like.

To the composition of this invention, other known additive components such as antioxidant, lubricant, antistatic agent, antiblocking agent, colorant and the like may be added, if desired.

The composition of this invention prepared in the above-mentioned manner can be made into a variety of articles such as sheet, film, container and the like excellent in optical properties by various known processing methods such as extrusion molding process, injection molding process, air-pressure forming process, vacuum forming process, blow molding process and the like. If it is used as a starting material of powdery coating material, a product excellent in surface gloss can be obtained.

In carrying out the molding and processing, the composition of this invention may be molded and processed in itself alone or may be laminated with other thermoplastic resin composition. In the lamination process, it is preferable to carry out them so that the composition of this invention comes to both or one outermost layer(s) of the product. As an example of lamination molding, the composition of this invention can be formed into double-layered or multi-layered co-extruded film by subjecting the composition of this invention together with other resin such as polyethylene, polypropylene, ethylene-vinyl acetate copolymer, polyamide, polyester or the like to co-extrusion blown film processing or co-extrusion film processing. Further, the single material film or co-extrusion film prepared from the composition of this invention can be made into a laminated film or laminated sheet by subjecting it to a dry lamination or extrusion lamination together with a stretched or unstretched film or sheet of polypropylene, polyamide or the like, stretched polyester film, aluminum foil, cellophane, paper, or their composite film or sheet. Further, the composition of this invention can be made into a laminate by extrusion-coating or coextrusion-coating it onto a substrate such as various plastic films, aluminum foil, paperboard, paper or the like. Further, various containers, for example, cups, trays, etc. can be prepared by subjecting single material sheet or co-extrusion sheet prepared from the composition of this invention to air-pressure forming process or vacuum forming process. Further, various container can be prepared by subjecting the composition of this invention itself or its combination with polyamide, polyvinyl alcohol or the like to co-extrusion blow molding process.

As for powder coating, the composition of this invention can be made into various containers by finely pulverizing the composition of this invention according to known methods using a pulverizing machine or an organic solvent and forming it according to a rotary molding process. Further, the composition of this invention can be coated onto various substrates such as metal, glass or the like according to fluidized bed coating process, electrostatic coating process, flame spray coating process, etc.

As has been mentioned above, the thermoplastic resin composition of this invention can give products excellent optical properties such as transparency, surface gloss and the like, in the fields of molding and powder coating.

Next, this invention will be explained more concretely with reference to the following examples. This invention is by no means limited by these examples, unless its essentiality is exceeded.

In these examples, melt flow rate, density, haze, gloss and intrisic viscosity were measured by the following methods.
(1) Melt flow rate
   It was measured according to JIS K6760.
(2) Density
   It was measured according to JIS K6760.
(3) Haze
   It was measured according to ASTM D1003.
(4) Internal haze
   After dipping the sample sheet in dimethyl phthalate, internal haze was measured according to ASTM D1003.
(5) Gloss
   It was measured according to JIS Z8741.
(6) Intrinsic viscosity [η]
   Using Ubbelohde viscometer, intrinsic viscosity was measured at 135°C in tetralin.

### Example 1

### (1-1) Synthesis of titanium compound catalyst

### (A) Synthesis of solid product

After replacing the inner atmosphere of a flask having a capacity of 500 ml and equipped with a stirrer and a dropping funnel with argon gas, 60 ml of n-heptane and 67 ml of tetra-n-butoxytitanium were charged into the flask, and inner temperature of the flask was kept at 45°C. While keeping the inner temperature of the flask at 45°C, a solution consisting of 108 ml of n-heptane and 44.8 ml of ethylaluminum sesquichloride was slowly dropped from the dropping funnel over a period of 3 hours. After dropping it, the mixture was heated to 60°C and stirred for one hour. Then, the mixture was allowed to stand at room temperature, and the solid matter was separated from liquid, four times washed with each 100 ml portion of n-heptane and dried under reduced pressure to obtain 38 g of a red-brown colored solid product.

One gram of this solid product contained 5.2 millimoles of titanium and 6.3 millimoles of n-butoxy group.

In the X ray diffraction pattern (Cu-K_{α} ray) of this solid product, no characteristic peak of titanium trichloride crystal was found at all.

### (B) Synthesis of prepolymerization-treated solid

After replacing the inner atmosphere of a flask having a capacity of 300 ml and equipped with a stirrer with argon gas, 241 ml of n-heptane, 0.34 g of triethylaluminum and 24.1 g of the solid product prepared in (A) were charged into the flask and kept at 50°C. While stirring the mixture, ethylene was slowly fed into the suspension for 20 minutes for the purpose of prepolymerization treatment during which partial pressure of ethylene was kept at 0.2 kg/cm². After the treatment, the solid matter was separated from the liquid, twice washed with each 50 ml portion of n-heptane and dried under reduced pressure to obtain 26.5 g of a prepolymerization-treated solid. The quantity of prepolymerization was 0.1 g polymer/1 g solid product.

### (C) Synthesis of titanium compound catalyst component

After replacing the inner atmosphere of a flask having a capacity of 100 ml with argon gas, 10.5 g of the prepolymerization-treated solid prepared in (B) and 40.5 ml of n-heptane were charged into the flask, and inner temperature of the flask was kept at 30°C. Then, 9.3 ml of diisoamyl ether was added, and treatment was carried out at 30°C for one hour, after which the temperature was elevated to 75°C. Then, 8.5 ml of titanium tetrachloride was added at 75°C, and a reaction was carried out at 75°C for one hour. After allowing the mixture to stand at room temperature, solid matter was separated from liquid, four times washed with each 50 ml portion of n-heptane and dried under reduced pressure to obtain a titanium catalyst component.

One gram of this solid catalyst component contained 5.0 millimoles of titanium and 0.27 millimole of n-butoxy group.

No fine powder nor agglomerated particle was noticeable in this solid catalyst component, and the catalyst component exhibited good powder characteristics.

### (1-2) Synthesis of vinylcyclohexane copolymer

After replacing the inner atmosphere of a one liter flask with an inert gas, 500 ml of dehydrated and purified n-heptane, 25 millimoles of diethylaluminum chloride and 20 g of the titanium compound catalyst synthesized in (1-1) were successively charged into the flask, and the mixture was heated to 60°C. Then, 400 ml of vinylcyclohexane was dropwise added thereto over a period of 3 hours, after which polymerization was continued for 2 hours. After completion of the polymerization, the solid product was washed with 500 ml of dehydrated and purified n-heptane and dried under reduced pressure to obtain 320 g of a titanium compound catalyst containing 300 g of vinylcyclohexane polymer.

Subsequently, 250 g of the titanium compound catalyst containing vinylcyclohexane polymer, 1.5 moles of diethylaluminum chloride and 150 liters of dehydrated and purified n-heptane were charged into a reactor made of stainless steel, having a capacity of 330 liters and equipped with a stirrer, and a copolymerization of ethylene and propylene was carried cut for 3.5 hours at a temperature of 50°C, while maintaining polymerization pressure of 4 kg/cm² gage with propylene and feeding ethylene so that the concentration of ethylene in gas phase came to 2% by volume. During the polymerization, hydrogen concentration in gas phase was controlled to become 7% by volume.

After completion of the polymerization, the polymer slurry was introduced into an after-treatment tank, 15 liters of n-butyl alcohol was added for the purpose of inactivation and ash removal, and then centrifugation and drying were carried out to obtain 22.7 kg of vinylcyclohexane-propylene-ethylene block copolymer. This block copolymer contained 1.01% by weight of vinylcyclohexane unit and 3% by weight of ethylene unit. Intrinsic viscosity [η] of the copolymer was 1.8 dl/g. After uniformly mixing 5% by weight of the vinylcyclohexane copolymer (1-2) obtained above with 95% by weight of an ion-polymerized polyethylene (stabilizer content 0.15% by weight, melt flow rate 20 g/10 minutes, density 0.920) by means of Henschel mixer, the resulting mixture was melted, kneaded and granulated by means of a single shaft extruder (diameter 30 mm) at 200°C at 80 rpm to obtain a resin composition of this invention. The content of vinylcyclohexane unit originated from vinylcyclohexane polymer in the resin composition was 0.05% by weight.

After melting and pressing this composition with a hot press molding machine adjusted to 230°C, it was cooled with a cooling press in which water having a temperature of 30°C was circulated, to prepare a sheet having a thickness of 1 mm. The pressed sheet thus obtained had no odor, and its haze and internal haze were 75% and 71%, respectively.

This sheet was allowed to stand for 7 days in a thermostatted bath adjusted to 40°C, and then its haze was again measured. As its result, no change was observed at all.

### Examples 2-5

Compositions were prepared in the same manner as in Example 1, except that the amount of vinylcyclohexane polymer was altered to 0.5% by weight in Example 2, 1% by weight in Example 3, 2% by weight in Example 4 and 10% by weight in Example 5, and hazes and internal hazes of their pressed sheets were measured. The content of vinylcycloalkane unit in the compositions was 0.005%, 0.01%, 0.02% and 0.1% by weight, respectively.

### Examples 6-8

Compositions were prepared in the same manner as in Example 1, except that the ion-polymerized polyethylene used in Example 1 was replaced with an ion-polymerized polyethylene having a stabilizer content of 0.45% by weight, a melt flow rate of 0.8 g/10 minutes and a density of 0.919 and the amount of vinylcyclohexane polymer was altered to 1% by weight in Example 6, 2% by weight in Example 7 and 5% by weight in Example 8. Each composition was made into a pressed sheet, and its haze and internal haze were measured. The results are shown in Table 1, together with the results of Example 1 and Examples 2-5.

### Comparative Example 1

A pressed sheet of the ion-polymerized polyethylene used in Example 1-5 showed a haze and an internal haze of 93% and 90%, respectively. The results of measurement are shown in Table 1.

### Comparative Example 2

A pressed sheet of the ion-polymerized polyethylene used in Examples 6-8 showed a haze and an internal haze of 91% and 88%, respectively. The results of measurement are shown in Table 1.

### Examples 9-11

Compositions were prepared in the same manner as in Example 1, except that an ion-polymerized polyethylene having a stabilizer content of 0.45% by weight, a lubricant content of 0.2% by weight, an antiblocking agent content of 0.25% by weight, a melt flow rate of 0.8 g/10 minutes and a density of 0.921 was compounded with 2.5% by weight (Example 9), 5% by weight (Example 10) or 7.5% by weight (Example 11) of vinylcyclohexane polymer. Content of the vinylcyclohexane unit in the compositions was 0.025%, 0.05% and 0.075% by weight, respectively.

Each of the compositions was made into blown films having a thickness of 0.03 mm and 0.06 mm by means of an inflation molding machine equipped with a 40 mm (diameter) screw at a resin temperature of 200°C, at a blow ratio of 1.8. On the films, haze and gloss were measured. The results are shown in Table 2.

### Comparative Example 3

The ion-polymerized polyethylene used in Examples 9-11 was made into an blown film by the same procedure as mentioned in Examples 9-11, and haze and gloss of this film were measured. The results are shown in Table 2.

### Comparative Example 4

In the same manner as in Example 1, 95% by weight of the same ion-polymerized polyethylene as used in Examples 9-11 was compounded with 5% by weight of an ethylene-propylene random copolymer (ethylene content: 3% by weight, melt flow rate: 5 g/10 minutes as measured according to JIS K6758), and the mixture was melted, kneaded and granulated. The composition thus obtained was made into an blown film in the same manner as in Example 9-11. Haze and gloss of this film were measured. The results are shown in Table 2.

### Examples 12-16

Each of the compositions which had been melted, kneaded and granulated in Example 1 and Examples 2-5 was made into an injection molded sheet having a thickness of 2 mm by means of an injection molding machine (Model IS100EN, manufactured by Toshiba Kikai K. K.) at an injection pressure of 600 kg/cm², at a resin temperature of 230°C, at a die temperature of 40°C. Haze and internal haze of this sheet were measured. The results are shown in Table 3.

### Comparative Example 5

The ion-polymerized polyethylene used in Example 1 was injection-molded in the same manner as in Example 12-16, and haze and internal haze of the injected sheet were measured. The results are shown in Table 3.

### Example 17

By the same procedure as in Example 1, 95% by weight of an ion-polymerized polyethylene having a stabilizer content of 0.1% by weight, a melt flow rate of 0.8 g/10 minutes and a density of 0.922 was melted, kneaded and granulated together with 5% by weight of a vinylcyclohexane polymer. This composition was made into a 500 cc bottle of JIS Z1703 by means of a blow molding machine (CAUTEX NB3B/S50-20AB, manufactured by Nippon Seikosho) at a resin temperature of 200°C, at a die temperature of 30°C. Haze and internal haze of the lateral surface of this bottle were measured to obtain the results shown in Table 4.

### Comparative Example 6

The ion-polymerized polyethylene used in Example 16 was formed into a bottle by the same procedure as in Example 17, and haze and internal haze of the material surface of this bottle were measured to obtain the results shown in Table 4.

### Comparative Example 7

The ion-polymerized polyethylene used in Example 16 was compounded with 5% by weight of the ethylene-propylene random copolymer used in Comparative Example 4, and the mixture was melted, kneaded and granulated in the same manner as in Example 1.

This composition was formed into a bottle in the same manner as in Example 16, and haze and internal haze of the lateral surface of this bottle were measured to obtain the results shown in Table 4.

### Example 18-22

Each of the compositions which had been melted, kneaded and granulated in Example 1 and Examples 2-5 was pulverized by means of a pulverizing machine (Model AP-S, manufactured by Hosokawa Tekkojo K. K.) to prepare a powdery material having a medium particle size of 200-300 microns.

The powdery material thus prepared was baked onto a grid blast steel board having a thickness of 3.2 mm, a length of 150 mm and a width of 70 mm for a period of 5 minutes in a thermostatted oven kept at 230°C, and then allowed to cool to room temperature to obtain a coated product. (The grid blast steel board had previously been heated for 15 minutes.) Gloss of the coated product was measured to obtain the results shown in Table 5.

### Comparative Example 8

The same ion-polymerized polyethylene as used in Example 1 was powdered and baked in the same manner as in Examples 18-22. Gloss of coated product was measured to obtain the result shown in Table 5.

### Example 23

### (2-2) Synthesis of vinylcyclohexane copolymer

After replacing the inner atmosphere of a one liter flask with in inert gas, 500 ml of dehydrated and purified n-heptane, 25 millimoles of diethylaluminum chloride and 50 g of the titanium compound catalyst synthesized according to Example 1 (1-1) were successively charged into the flask. After heating the mixture to 60°C, 100 ml of vinylcyclohexane was dropwise added thereto over a period of one hour, and polymerization was carried out for 2 hours. After completion of the polymerization, the solid product was washed with 500 ml of dehydrated and purified n-heptane and dried under reduced pressure to obtain 121 g of a titanium compound catalyst containing 71 g of vinylcyclohexane polymer.

Then, 65 g of the titanium compound catalyst containing vinylcyclohexane polymer, 1.5 moles of diethylaluminum chloride and 150 liters of dehydrated and purified n-heptane were charged into a stainless steel reactor having a capacity of 330 liters and equipped with a stirrer, and kept at 60°C for 3 hours while maintaining a polymerization pressure of 6 kg/cm² gage with propylene.

During the polymerization, hydrogen concentration in the gas phase was controlled to become 5% by volume. After completion of the polymerization, the polymer slurry was transferred to an after-treatment tank, where 15 liters of n-butyl alcohol was added for the purpose of inactivation and removal of ash. Then, centrifugation and drying were carried out, and there was obtained 38.0 kg of a vinylcyclohexane- propylene block copolymer. This block copolymer contained 0.1004% by weight of vinylcyclohexane unit, and intrinsic viscosity [η] of the copolymer was 1.7 dl/g.

Then, 5% by weight of the vinylcyclohexane copolymer (2-2) obtained above and 95% by weight of the same ion-polymerized polyethylene as used in Example 1 (stabilizer content 0.15% by weight, melt flow rate 20 g/10 minutes, density 0.920) were uniformly mixed together by means of Henschel mixer and melted, kneaded and granulated by means of 30 mm (diameter) single shaft type extruder at 200°C at 80 rpm to prepare a resin composition. The resin composition contained 0.005% by weight of vinylcyclohexane unit.

This composition was melted and pressed by means of a hot press molding machine adjusted to 230°C, and then cooled in a cooling press into which water having a temperature of 30°C was circulated. Thus, a sheet having a thickness of 1 mm was obtained.

This pressed sheet had no odor, and its haze and internal haze were 78% and 72%, respectively.

### Examples 24-25

Compositions were prepared in the same manner as in Example 23, except that the amount of vinylcyclohexane polymer was altered to 7.5% by weight in Example 24 and 10% by weight in Example 25. Haze and internal haze of the pressed sheets thus obtained were measured. The content of vinylcyclohexane unit in these compositions was 0.0075% and 0.01% by weight, respectively.

### Examples 26-28

Compositions were prepared in the same manner as in Example 23, except that the ion-polymerized polyethylene used in Example 23 was replaced with a radical polymerized polyethylene having a melt flow rate of 20 g/10 minutes and a density of 0.918 and the amount of vinylcyclohexane polymer was altered to 5% by weight in Example 26, 7.5% by weight in Example 27 and 10% by weight in Example 28. Haze and internal haze of the pressed sheets were measured to obtain the results shown in Table 6, together with the results of Example 23 and Examples 24-25.

### Comparative Example 9

Haze and internal haze of the radical-polymerized polyethylene used in Examples 26-28 were 92% and 85%, respectively. The results of measurement are shown in Table 6.

### Examples 29-31

Each of the compositions which had been melted, kneaded and granulated in Example 23 and Examples 24-25 was pulverized by means of pulverizing machine (Model AP-S, manufactured by Hosokawa Tekkojo K. K.) to prepare a powdery material having a medium particle size of 200-300 microns.

This powdery material was baked onto a grid blast steel board having a thickness of 3.2 mm, a length of 150 mm and a width of 70 mm for 5 minutes in a thermostatted oven kept at 230°C, and then allowed to cool to room temperature to prepare a coated product. (The grid blast steel board had previously been heated for 15 minutes.) Gloss of the coated product was measured to obtain the result shown in Table 7.

**Table 1**

| No. | Content of vinylcyclohexane unit in composition (% by wt.) | Haze (%) | Internal haze (%) |
|---|---|---|---|
| Example 1 | 0.05 | 75 | 71 |
| Example 2 | 0.005 | 80 | 77 |
| Example 3 | 0.01 | 77 | 72 |
| Example 4 | 0.02 | 76 | 72 |
| Example 5 | 0.1 | 79 | 74 |
| Comparative Example 1 | - | 93 | 90 |
| Example 6 | 0.01 | 71 | 67 |
| Example 7 | 0.02 | 63 | 69 |
| Example 8 | 0.05 | 57 | 54 |
| Comparative Example 2 | - | 91 | 88 |

**Table 2**

| No. | Content of vinylcyclohexane unit in composition (% by wt.) | Thickness of film (µ) | Haze (%) | Gloss (%) |
|---|---|---|---|---|
| Example 9 | 0.025 | 30 | 15.3 | 76 |
| | | 60 | 14.8 | 79 |
| Example 10 | 0.05 | 30 | 10.4 | 94 |
| | | 60 | 9.2 | 105 |
| Example 11 | 0.075 | 30 | 11.8 | 80 |
| | | 60 | 9.5 | 100 |
| Comparative Example 3 | - | 30 | 17.2 | 70 |
| | | 60 | 16.1 | 73 |
| Comparative Example 4 | - | 30 | 17.0 | 73 |
| | | 60 | 16.1 | 74 |

**Table 3**

| No. | Content of vinylcyclohexane unit in composition (% by wt.) | Haze (%) | Internal haze (%) |
|---|---|---|---|
| Example 12 | 0.05 | 80 | 75 |
| Example 13 | 0.005 | 85 | 80 |
| Example 14 | 0.01 | 83 | 78 |
| Example 15 | 0.02 | 80 | 74 |
| Example 16 | 0.1 | 73 | 62 |
| Comparative Example 5 | - | 94 | 91 |

**Table 4**

| No. | Content of vinylcyclohexane unit in composition (% by wt.) | Haze (%) | Internal haze (%) |
|---|---|---|---|
| Example 17 | 0.05 | 41 | 22 |
| Comparative Example 6 | - | 46 | 27 |
| Comparative Example 7 | - | 50 | 30 |

**Table 5**

| No. | Content of vinylcyclohexane unit in composition (% by wt.) | Gloss (%) |
|---|---|---|
| Example 18 | 0.05 | 37 |
| Example 19 | 0.005 | 32 |
| Example 20 | 0.01 | 29 |
| Example 21 | 0.02 | 33 |
| Example 22 | 0.1 | 42 |
| Comparative Example 8 | - | 17 |

**Table 6**

| No. | Content of vinylcyclohexane unit in composition (% by wt.) | Haze (%) | Internal haze (%) |
|---|---|---|---|
| Example 23 | 0.005 | 78 | 72 |
| Example 24 | 0.0075 | 75 | 70 |
| Example 25 | 0.01 | 75 | 71 |
| Example 26 | 0.005 | 81 | 78 |
| Example 27 | 0.0075 | 78 | 75 |
| Example 28 | 0.01 | 80 | 76 |
| Comparative Example 9 | - | 92 | 85 |

**Table 7**

| No. | Content of vinylcyclohexane unit in composition (% by wt.) | Gloss (%) |
|---|---|---|
| Example 29 | 0.005 | 38 |
| Example 30 | 0.0075 | 42 |
| Example 31 | 0.01 | 37 |

## Claims

1. A thermoplastic resin composition comprising (A) up to 10% by weight of a polymer of vinylcycloalkane having 6 or more carbon atoms and an intrinsic viscosity of 0.5 to 10 dl/g as measured in tetralin at 135°C at the concentration of 50mg/25ml, and (B) at least 90% by weight of polyethylene and containing 0.00005% to 1.0% by weight of vinylcycloalkane repeating units originating from vinylcycloalkane polymer (A) based on the total weight of polymers (A) and (B).

2. A composition according to claim 1 wherein the vinylcycloalkane polymer (A) is a vinylcyclohexane-propylene copolymer.

3. A composition according to claim 1 wherein the vinylcycloalkane polymer (A) is a vinylcyclohexane-propylene-ethylene copolymer.

4. A composition according to claim 1 wherein the vinylcycloalkane polymer (A) is a vinylcyclohexane-propylene-α-olefin copolymer.

5. A composition according to any one of claims 1 to 4 wherein the polyethylene (B) is obtainable by a radical polymerisation process.

6. A composition according to any one of claims 1 to 4 wherein the polyethylene (B) is obtainable by an ionic polymerisation process.

7. A process for producing shaped articles comprising shaping a thermoplastic resin composition according to any one of claims 1 to 6.

8. A shaped article comprising a thermoplastic resin composition according to any one of claims 1 to 6.

## Patentansprüche

1. Thermoplastische Kunstharzzusammensetzung, die (A) bis zu 10 Gew.-% eines Polymeren eines Vinylcycloalkans mit mindestens 6 Kohlenstoffatomen und einer Grenzviskosität von 0,5 bis 10 dl/g, gemessen in Tetralin bei 135°C bei einer Konzentration von 50 mg/25 ml, und (B) mindestens 90 Gew.-% Polyethylen umfaßt und 0,00005 bis 1,0 Gew.-% von sich wiederholenden Vinylcycloalkaneinheiten, die sich vom Vinylcycloalkanpolymeren (A) ableiten, enthält, bezogen auf das Gesamtgewicht der Polymeren (A) und (B).

2. Zusammensetzung nach Anspruch 1, worin das Vinylcycloalkanpolymere (A) ein Vinylcylohexan-Propylen-Copolymeres ist.

3. Zusammensetzung nach Anspruch 1, worin das Vinylcycloalkanpolymere (A) ein Vinylcylohexan-Propylen-Ethylen-Copolymeres ist.

4. Zusammensetzung nach Anspruch 1, worin das Vinylcycloalkanpolymere (A) ein Vinylcylohexan-Propylen-α-Olefin-Copolymeres ist.

5. Zusammensetzung nach einem der Ansprüche 1 bis 4, worin das Polyethylen (B) durch ein radikalisches Polymerisationsverfahren erhältlich ist.

6. Zusammensetzung nach einem der Ansprüche 1 bis 4, worin das Polyethylen (B) durch ein ionisches Polymerisationsverfahren erhältlich ist.

7. Verfahren zur Herstellung von Formteilen, umfassend das Formen einer thermoplastischen Kunstharzzusammensetzung nach einem der Ansprüche 1 bis 6.

8. Formteil, umfassend eine thermoplastische Kunstharzzusammensetzung nach einem der Ansprüche 1 bis 6.

## Revendications

1. Composition de résine thermoplastique, comprenant (A) jusqu'à 10% en poids d'un polymère de vinylcycloalcane à 6 atomes de carbone ou plus, ayant une viscosité intrinsèque de 0,5 à 10 dl/g, mesurée dans de la tétraline à 135°C à la concentration de 50 mg/25 ml, et (B) au moins 90% en poids de polyéthylène, et contenant de 0,00005% à 1,0% en poids de motifs répétitifs vinylcycloalcane provenant du polymère de vinylcycloalcane (A), sur la base du poids total des polymères (A) et (B).

2. Composition selon la revendication 1, dans laquelle le polymère de vinylcycloalcane (A) est un copolymère vinylcyclohexane/propylène.

3. Composition selon la revendication 1, dans laquelle le polymère de vinylcycloalcane (A) est un copolymère vinylcyclohexane/propylène/éthylène.

4. Composition selon la revendication 1, dans laquelle le polymère de vinylcycloalcane (A) est un copolymère vinylcyclohexane/propylène/α-oléfine.

5. Composition selon l'une quelconque des revendications 1 à 4, dans laquelle le polyéthylène (B) peut être obtenu par un procédé de polymérisation radicalaire

6. Composition selon l'une quelconque des revendications 1 à 4, dans laquelle le polyéthylène (B) peut être obtenu par un procédé de polymérisation ionique.

7. Procédé de production d'articles mis en forme, comprenant la mise en forme d'une composition de résine thermoplastique selon l'une quelconque des revendications 1 à 6.

8. Article mis en forme, comprenant une composition de résine thermoplastique selon l'une quelconque des revendications 1 à 6.
